(19) **Europäisches Patentamt**
**European Patent Office**
**Office européen des brevets**

(11) **EP 4 080 813 B1**

(12) **EUROPEAN PATENT SPECIFICATION**

(45) Date of publication and mention
of the grant of the patent:
**22.05.2024 Bulletin 2024/21**

(21) Application number: **20909121.4**

(22) Date of filing: **24.12.2020**

(51) International Patent Classification (IPC):
**H04L 9/32** (2006.01)

(52) Cooperative Patent Classification (CPC):
**H04L 9/0631; H04L 1/0061; H04L 9/0816;**
**H04L 9/12; H04L 9/32; H04L 63/0428;**
**H04L 63/123;** H04L 12/40013; H04L 2012/40215;
H04L 2012/40273; H04L 2209/84; H04L 2463/061

(86) International application number:
**PCT/CN2020/139121**

(87) International publication number:
**WO 2021/136072 (08.07.2021 Gazette 2021/27)**

(54) **COMMUNICATION METHOD AND ELECTRONIC DEVICE**

KOMMUNIKATIONSVERFAHREN UND ELEKTRONISCHE VORRICHTUNG

PROCÉDÉ DE COMMUNICATION ET DISPOSITIF ÉLECTRONIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.12.2019 CN 201911417603**

(43) Date of publication of application:
**26.10.2022 Bulletin 2022/43**

(73) Proprietor: **Huawei Technologies Co., Ltd.**
**Shenzhen, Guangdong 518129 (CN)**

(72) Inventors:
• **YANG, Yanjiang**
**Shenzhen, Guangdong 518129 (CN)**
• **HENRICKSEN, Matt**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A1- 2 775 660**    **WO-A1-2013/065689**
**WO-A1-2019/217610**    **CN-A- 106 549 940**
**CN-A- 106 790 053**    **CN-A- 109 672 538**

• **GAO LIJUN ET AL: "An ultralightweight RFID**
**authentication protocol with CRC and**
**permutation", JOURNAL OF NETWORK AND**
**COMPUTER APPLICATIONS, vol. 41, 1 May 2014**
**(2014-05-01), pages 37-46, XP093008487, US**
**ISSN: 1084-8045, DOI: 10.1016/j.jnca.2013.10.014**

## Description

[DELETED]

## TECHNICAL FIELD

Embodiments of this application relate to the field of vehicle-mounted communications technologies, and in particular, to a communication method and an electronic device.

## BACKGROUND

With development of society, an increasing quantity of vehicles are used. A plurality of apparatuses referred to as electronic control units (ECU: Electronic Control Unit) are configured in an in-vehicle system of a vehicle. A network that connects the ECUs is referred to as an in-vehicle network. Currently, a most common in-vehicle network generally meets a related protocol of a controller area network (Controller Area Network, CAN).

In the conventional technology, an ECU in an in-vehicle system performs authentication on a CAN message by using a fixed key. For example, the CAN Auth performs authentication on the message through HMAC. In this authentication manner, the ECU needs to derive an authentication key from a fixed key, a counter, and a random number sent through a CAN+ channel.

However, the foregoing manner cannot be directly used in a standard CAN network, and the fixed key is likely to crack. Consequently, the in-vehicle system is attacked.

WO 2019/217610 describes a vehicle access system configured to wirelessly receive a shuffled message from the portable communication device, de-shuffle the shuffled message at a bit level to obtain a message, wherein deshuffling the shuffled message at a bit level includes exchanging one bit at a first indexed position within the shuffled message with one bit at a second indexed position within the shuffled message, and initiate a vehicle operation based on the message.

## SUMMARY

Embodiments of this application provide a communication method and an electronic device, to improve information transmission security.

According to the invention, a communication method is provided according to the subject-matter of claim 1.

In a possible design, the determining an authentication key based on a first value and a shared key includes:
generating the authentication key based on the first value and the shared key by using a block encryption algorithm.

In a possible design, the splitting the authentication key to obtain a first key and a second key includes:

generating a first initial key based on the authentication key and a first count value by using a block encryption algorithm, where the first count value is a value corresponding to a first counter; and
splitting the first initial key into the first key and the second key.

[DELETED]

In a possible design, the method further includes:
if the values of the bits in the second key can be used to determine only locations of some CRC bits in the data payload field, using a CRC bit that is determined last as a start point, and sequentially placing the remaining CRC bits into subsequent payload bits.

In a possible design, the determining the location of the CRC bit in the data payload field based on values of bits in the second key includes:

if a value of the first bit in the second key is 1, sequentially placing the CRC bits into corresponding payload bits in the data payload field in a right-to-left sequence in the data payload field based on the values of the bits in the second key; or
if a value of the first bit in the second key is 0, sequentially placing the CRC bits into corresponding payload bits in the data payload field in a left-to-right sequence in the data payload field based on the values of the bits in the second key.

[DELETED]
[DELETED]
[DELETED]
[DELETED]
According to the invention, a communication method is provided according to the subject-matter of claim 6.

In a possible design, the determining an authentication key based on a first value and a shared key includes:
generating the authentication key based on the first value and the shared key by using a block encryption algorithm.

In a possible design, before the performing authentication on the CAN frame by using the authentication key, the method further includes:

obtaining a second count value corresponding to a second counter; and
comparing the second count value with a first count value, and if the second count value is greater than the first count value, determining that the authentication fails, where the first count value is a value corresponding to a first counter of the first ECU.

In a possible design, the performing authentication on the CAN frame by using the third key and the fourth key includes:

reading a data payload field of the CAN frame, and decrypting the data payload field by using the third key, to obtain intermediate data;

decrypting the intermediate data by using the fourth key, to obtain the restored valid data payload and the restored CRC; and

performing verification on the restored valid data payload and the restored CRC by using a CRC algorithm, and if the verification fails, determining that the authentication fails.

According to the invention, an electronic device is provided according to the subject-matter of claim 10.

According to the invention, an electronic device is provided according to the subject-matter of claim 11.

According to the invention, a system is provided according to the subject-matter of claim 12.

In this application, a manager broadcasts a first value to electronic control units based on a time segment, so that when a CAN message is sent between the electronic control units, encryption and authentication can be performed by using the first value and a shared key. This improves information transmission security in an in-vehicle system.

## BRIEF DESCRIPTION OF DRAWINGS

FIG. 1 is a schematic diagram of a communications system according to an embodiment of this application;

FIG. 2 is a schematic diagram of a structure of an electronic control unit;

FIG. 3 is a flowchart 1 of a communication method according to an embodiment of this application;

FIG. 4 is a schematic diagram 1 of a principle of generating M* based on $c_1$;

FIG. 5 is a schematic diagram 2 of a principle of generating M* based on $c_1$;

FIG. 6 is a flowchart 2 of a communication method according to an embodiment of this application;

FIG. 7 is a flowchart 3 of a communication method according to an embodiment of this application;

FIG. 8 is a flowchart 4 of a communication method according to an embodiment of this application;

FIG. 9 is a schematic diagram 1 of a structure of a first ECU according to an embodiment of this application;

FIG. 10 is a schematic diagram 2 of a structure of a first ECU according to an embodiment of this application;

FIG. 11 is a schematic diagram 1 of a structure of a second ECU according to an embodiment of this application;

FIG. 12 is a schematic diagram 2 of a structure of a second ECU according to an embodiment of this application;

FIG. 13 is a schematic diagram of a structure of an electronic device according to an embodiment of this application; and

FIG. 14 is a schematic diagram of a structure of a communications system according to an embodiment of this application.

## DESCRIPTION OF EMBODIMENTS

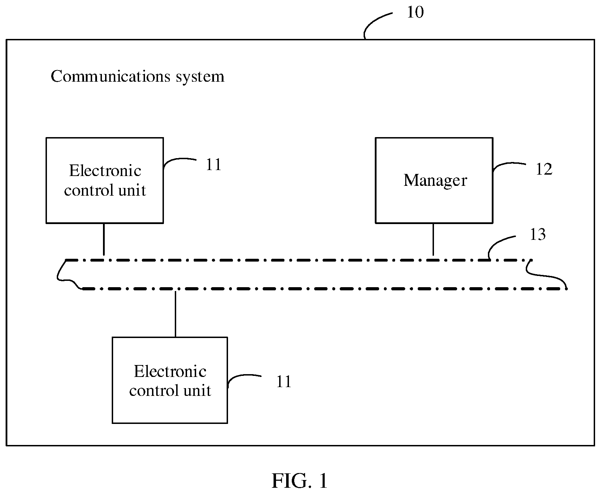

FIG. 1 is a schematic diagram of a communications system according to an embodiment of this application. As shown in FIG. 1, the communications system 10 includes an electronic control unit 11, a manager 12, and a bus 13 that connects the electronic control unit 11 and the manager 12.

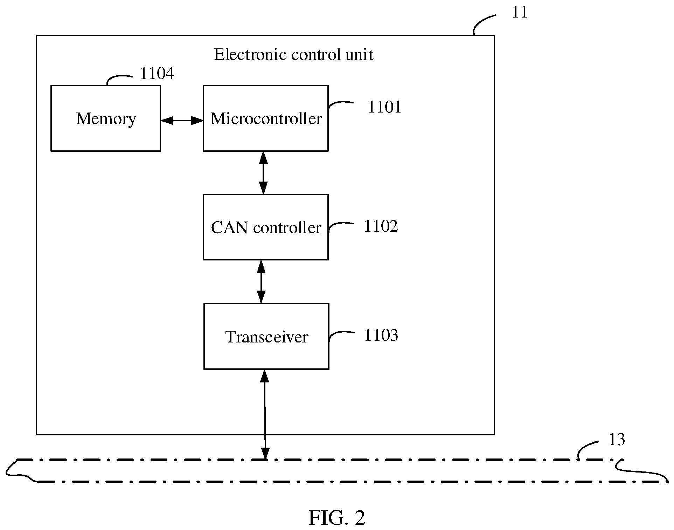

FIG. 2 is a schematic diagram of a structure of an electronic control unit. As shown in FIG. 2, the electronic control unit 11 includes a microcontroller 1101, a CAN controller 1102, a transceiver 1103, and a memory 1104. The memory 1104 stores a computer program. The microcontroller 1101 loads the computing program from the memory 1104, generates control instructions after executing a corresponding program process, and sends the control instructions to the CAN controller 1102, so that the CAN controller 1102 receives or sends a CAN message by using the transceiver 1103 communicatively connected to the bus 13.

A vehicle is used as an example. A plurality of electronic control units in the vehicle constitute a CAN network through a bus, and any electronic control unit may send a CAN message to another electronic control unit through the bus. During actual application, if encryption or authentication is not performed on a CAN message transmitted between electronic control units, an in-vehicle system is vulnerable to a network attack, and an attacker or a compromised electronic control unit may freely send a CAN message. Consequently, security of the in-vehicle system is seriously threatened.

Specifically, the CAN message is transmitted through the bus in a form of a CAN frame, and the CAN frame is generally a CAN2.0A standard frame or a CAN2.0B standard frame. The CAN frame includes an ID field, a CRC field, and a DATA field. The ID field is used to distinguish between CAN frames, the CRC field is used to load a CRC code of data, and the DATA field is used to load the data. The CRC code is used to check an error in data transmission, but has no key function. Therefore, extra information generated by performing authentication on the CAN message needs to be carried in the DATA field. For example, in the conventional technology, an ECU in an in-vehicle system performs authentication on a CAN message by using a fixed key. For example, the CAN Auth performs authentication on the message through HMAC. In this authentication manner, the ECU needs to derive an authentication key from a fixed key, a counter, and a random number sent through a CAN+ channel. Although encryption may be performed on the CAN message by using the DATA field, this encryption manner causes extra load, and the fixed key is likely to crack. Consequently, the in-vehicle system is attacked.

For the problem in the conventional technology, embodiments of this application provide a communication method, to perform encryption and authentication on a CAN message without causing extra load. This improves information transmission security in an in-vehicle system.

An effect in embodiments is performing both encryption and authentication on a CAN frame. For CAN message protection (authentication or encryption), a basic security requirement is to prevent a replay attack. A counter may be used to prevent the replay attack. To be specific, it is assumed that a sending ECU (sender) and a receiving ECU (receiver) each maintain one synchronized counter (to facilitate synchronization and verification on a CAN message, a value of the counter usually needs to be sent together with the CAN message). Because a length of a data field of the CAN frame is limited, the value of the counter cannot be very large. Therefore, a time may be divided into time segments (each time segment is one session), and a manager (for example, a gateway) broadcasts different values (Global Sessional Number, GSN) to all ECUs at the beginning of the time segments. The ECU may generate, by using the value and a shared key, an authentication key used to perform encryption and authentication on the CAN message. In this encryption and authentication manner, encryption and authentication may be performed on the CAN message without causing extra load, so that information transmission security of the in-vehicle system is improved.

The following describes the communication method of this application in detail by using specific embodiments. It should be noted that the following several specific embodiments may be combined with each other. Same or similar content is not described repeatedly in different embodiments.

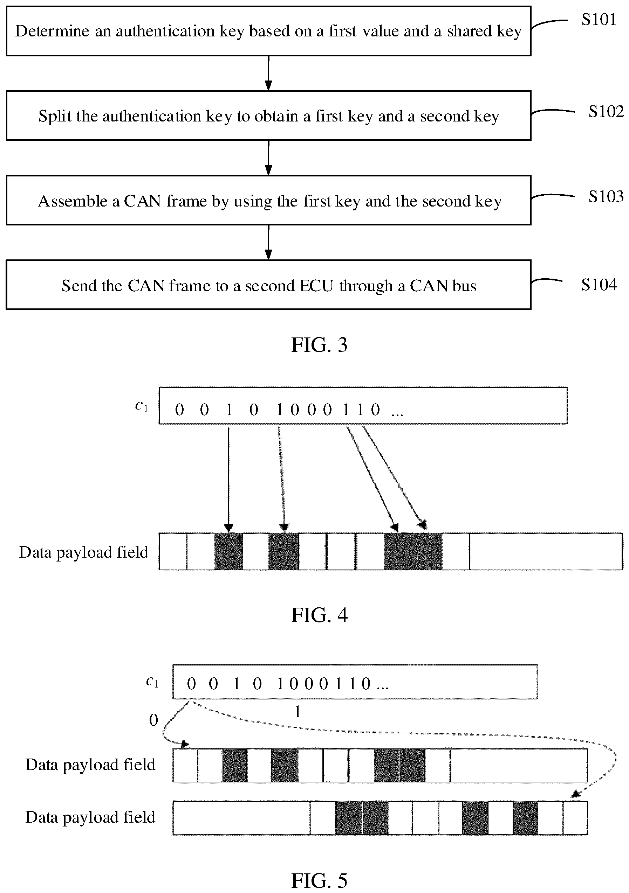

FIG. 3 is a flowchart 1 of a communication method according to an embodiment of this application. As shown in FIG. 3, the method in this embodiment includes the following steps:

   Step S 101: Determine an authentication key based on a first value and a shared key.
   Step S 102: Split the authentication key to obtain a first key and a second key.
   Step S103: Assemble a CAN frame by using the first key and the second key.
   Step S104: Send the CAN frame to a second ECU through a CAN bus.

In this embodiment, a first ECU is communicatively connected to the second ECU through the bus, and the first ECU may send a CAN message to the second ECU. The first value is a value broadcast by a manager based on a time segment, and the shared key is a key shared by all ECUs in a vehicle. The first key is used to encrypt a valid data payload, and the second key is used to randomize a location of a CRC bit in a data payload field,

For example, the authentication key may be generated based on the first value and the shared key by using a block encryption algorithm. At a start moment of each time segment, the manager broadcasts the first value to all the ECUs. Because each time segment corresponds to a different time, the first value is also different. Therefore, the first value herein does not need to be a random number. The first value may alternatively be sent by using the CAN frame, and a length of a data field of the CAN frame is generally 64 bits.

Specifically, the first value broadcast by the manager to all the ECUs functions as a timestamp, and the first value is determined by a clock or a counter of the manager. It is assumed that, in an $i^{th}$ time segment, the first value broadcast by the manager is $GSN_i$, and the shared key between the first ECU and the second ECU is K. An ASE encryption algorithm is used as an example. Assuming that a data length of the shared key is 128 bits, the authentication key $K_i$ is calculated in the following manner:

$$K_i = AES128(K, GSN_i\|Padding).$$

In this embodiment, AES128 is used to generate $K_i$, achieving higher encryption efficiency. Because $GSN_i\|Padding$ has a fixed length and is a single block, using the block encryption algorithm as a KDF is secure. Because neither the first ECU nor the second ECU directly encrypts the CAN message by using the shared key, it is more difficult to crack the CAN message, and information transmission security can be ensured.

It should be noted that, in this embodiment, the ASE is used as an example for description, but the block encryption algorithm is not limited thereto. All existing encryption algorithms may be applied to this embodiment.

For example, in this embodiment, encryption and authentication may be performed on the CAN message by using the authentication key. Therefore, a function of a CRC field is not necessary, and an original CRC field and an original DATA field of the CAN frame may be combined into a new data field. If a length of the CRC field is 15 bits and a length of the DATA field is 64 bits, a length of the data field obtained after the combination is 81 bits.

In this embodiment, to prevent a replay attack, the first ECU and the second ECU each need to maintain one synchronized counter referred to as a local counter (correspondingly, a GSN generated by the manager may be considered as a global counter). At a start moment of each time segment, when calculating the authentication key, the first ECU and the second ECU each reset the local counter to 0, and perform recounting.

For example, to facilitate CAN frame authentication and local counter synchronization by a sender/receiver, a local counter value is preferably carried in the CAN frame. Therefore, the DATA field (data field) may include a local counter field and the data payload field. If a length of the local counter field is 11 bits, a length of the data payload field may be 70 bits or 53 bits.

In step S102, a first count value corresponding to the local counter (subsequently referred to as a first counter) of the first ECU may be first obtained, then a first initial key is generated based on the authentication key and the first count value by using the block encryption algorithm, and finally the first initial key is split into the first key and the second key.

For example, when receiving the CAN frame sent by the manager, the first ECU extracts, from the CAN frame, the first value corresponding to the $i$th time segment. Then, the first ECU reads, from the first counter, the first count value $LC_i$ corresponding to the $i$th time segment. The first initial key c is calculated by using the AES128 encryption algorithm, and the first initial key c is calculated according to the following formula:

$$c = AES128(K_i, LC_i\|Padding).$$

If $LC_i$ is less than 128 bits, $LC_i$ needs to be padded to 128 bits.

For example, the first initial key is split into the first key and the second key. A keystream is generated based on the first key, and an exclusive OR operation is performed on the keystream and data corresponding to the valid data payload, to obtain encrypted data. The location of the CRC bit in the data payload field is determined based on values of bits in the second key. Each CRC bit is placed into a corresponding payload bit based on the location of the CRC bit in the data payload field. The encrypted data is placed into the remaining payload bits in the data payload field.

Specifically, the first initial key c is split into two parts: $c = c_1\|c_0$, s.t., $|c_0| = IMI + |CRC|$. M is the valid data payload of the CAN frame, IMI is a length of M, and $|CRC| = 15$. Herein, $c_0$ is the first key, and $c_1$ is the second key. In addition, $c_0$ is used as the keystream for data encryption, and $c_1$ is used to randomize the location of the CRC bit in the data payload field. The value $LC_i$ is placed into the local counter field, and the location of the CRC bit in the data payload field is determined based on a bit 1 (or a bit 0) in $c_1$, to obtain M*.

FIG. 4 is a schematic diagram 1 of a principle of generating M* based on $c_1$. As shown in FIG. 4, values of the third, fifth, ninth, and tenth bits in $c_1$ are 1. Therefore, the third, fifth, ninth, and tenth bits in the data payload (payload) field are the first four CRC bits, until all CRC bits are placed into data payload bits. Then, bits in M are sequentially placed into the remaining locations, to obtain M*. It should be noted that IMI is less than 64. Therefore, $|c_1| \geq 128 - 81 = 47$. Theoretically, there are about 23 bits 1 in $c_1$. This is sufficient to determine the location of the CRC bit in the data payload field,

For example, if the values of the bits in the second key can be used to determine only locations of some CRC bits in the data payload field, a CRC bit that is determined last is used as a start point, and the remaining CRC bits are sequentially placed into subsequent payload bits.

FIG. 5 is a schematic diagram 2 of a principle of generating M* based on $c_1$. As shown in FIG. 5, if a value of the first bit in the second key is 1, the CRC bits are sequentially placed into corresponding payload bits in the data payload field in a right-to-left sequence in the data payload field based on the values of the bits in the second key. Alternatively, if a value of the first bit in the second key is 0, the CRC bits are sequentially placed into corresponding payload bits in the data payload field in a left-to-right sequence in the data payload field based on the values of the bits in the second key.

In this embodiment, $c_1$ is used to randomize the location of the CRC bit in the data payload field, to break linearity of the CRC.

Further, $c_0 \oplus M*$ is placed into the data payload field, and $\oplus$ represents an exclusive OR operation. That is, $c_0$ is used to encrypt M*, and the key is placed into the data payload field.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system.

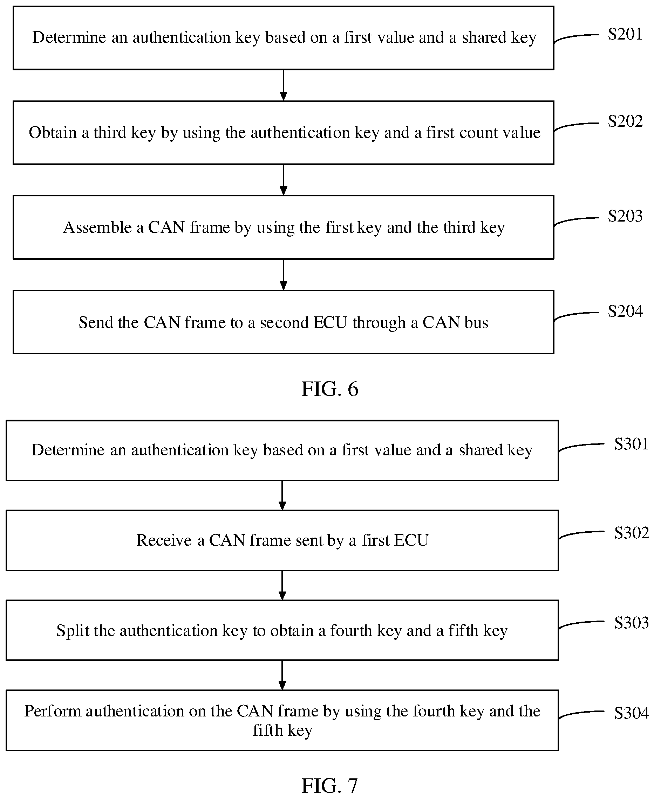

FIG. 6 is a flowchart 2 of a communication method according to an embodiment of this application. As shown in FIG. 6, the method in this embodiment includes the following steps:

Step S201: Determine an authentication key based on a first value and a shared key.
Step S202: Obtain a third key by using the authentication key and a first count value.
Step S203: Assemble a CAN frame by using the first count value and the third key.
Step S204: Send the CAN frame to a second ECU through a CAN bus.

In this embodiment, a first ECU is communicatively connected to the second ECU through the bus, and the first ECU may send a CAN message to the second ECU. The first value is a value broadcast by a manager based on a time segment, and the shared key is a key shared by all ECUs in a vehicle. The first key is used to encrypt a valid data payload, and the second key is used to randomize a location of a CRC bit in a data payload field,

For example, the authentication key may be generated based on the first value and the shared key by using a block encryption algorithm. At a start moment of each time segment, the manager broadcasts the first value to all the ECUs. Because each time segment corresponds to a different time, the first value is also different. Therefore, the first value herein does not need to be a random number. The first value may alternatively be sent by using the CAN frame, and a length of a data field of the CAN frame is generally 64 bits.

Specifically, the first value broadcast by the manager to all the ECUs functions as a timestamp, and the first value is determined by a clock or a counter of the manager. It is assumed that, in an $i^{th}$ time segment, the first value broadcast by the manager is $GSN_i$, and the shared key between the first ECU and the second ECU is $K$. An ASE encryption algorithm is used as an example. Assuming that a data length of the shared key is 128 bits, the authentication key $K_i$ is calculated in the following manner:

$$K_i = AES128(K, GSN_i \| Padding).$$

In this embodiment, AES128 is used to generate $K_i$, achieving higher encryption efficiency. Because $GSN_i \| Padding$ has a fixed length and is a single block, using the block encryption algorithm as a KDF is secure. Because neither the first ECU nor the second ECU directly encrypts the CAN message by using the shared key, it is more difficult to crack the CAN message, and information transmission security can be ensured.

It should be noted that, in this embodiment, the ASE is used as an example for description, but the block encryption algorithm is not limited thereto. All existing encryption algorithms may be applied to this embodiment.

In step S202, the first count value corresponding to a local counter (subsequently referred to as a first counter) of the first ECU may be first obtained, then a first initial key is generated based on the authentication key and the first count value; and a length of the first initial key is pruned based on a data length required for authentication, to obtain the third key.

In step S203, a keystream may be generated based on the third key, and an exclusive OR operation is performed on the keystream and data corresponding to the valid data payload, to obtain encrypted data.

For example, in step S203, it is assumed that the third key vd = Truncate (c). The first initial key c is pruned to the required length. A length of the third key vd is related to to-be-achieved authentication strength. $LC_i$ is placed into a local counter field, and M‖vd is placed into the data payload field, to obtain the assembled CAN frame.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system.

FIG. 7 is a flowchart 3 of a communication method according to an embodiment of this application. As shown in FIG. 7, the method in this embodiment includes the following steps:

Step S301: Determine an authentication key based on a first value and a shared key.
Step S302: Receive a CAN frame sent by a first ECU.
Step S303: Split the authentication key to obtain a fourth key and a fifth key.
step S304: Perform authentication on the CAN frame by using the fourth key and the fifth key.

In this embodiment, the first ECU is communicatively connected to a second ECU through a bus, and the second ECU may receive a CAN message sent by the first ECU. The first value is a value broadcast by a manager based on a time segment, and the shared key is a key shared by all ECUs in a vehicle. The first key is used to encrypt a valid data payload, and the second key is used to randomize a location of a CRC bit in a data payload field,

For example, the authentication key may be generated based on the first value and the shared key by using a block encryption algorithm. At a start moment of each time segment, the manager broadcasts the first value to all the ECUs. Because each time segment corresponds to a different time, the first value is also different. Therefore, the first value herein does not need to be a random number. The first value may alternatively be sent by using the CAN frame, and a length of a data field of the CAN frame is generally 64 bits.

Specifically, the first value broadcast by the manager to all the ECUs functions as a timestamp, and the first value is determined by a clock or a counter of the manager. It is assumed that, in an $i^{th}$ time segment, the first value broadcast by the manager is $GSN_i$, and the shared key between the first ECU and the second ECU is K. An ASE encryption algorithm is used as an example. Assuming that a data length of the shared key is 128 bits, the authentication key $K_i$ is calculated in the following manner:

$$K_i = AES128(K, GSN_i \| Padding).$$

In this embodiment, AES128 is used to generate $K_i$, achieving higher encryption efficiency. Because $GSN_i \| Padding$ has a fixed length and is a single block, using block encryption algorithm as a KDF is secure. Because neither the first ECU nor the second ECU directly encrypts the CAN message by using the shared key, it is more difficult to crack the CAN message, and information transmission security can be ensured.

It should be noted that, in this embodiment, the ASE is used as an example for description, but the block encryption algorithm is not limited thereto. All existing encryption algorithms may be applied to this embodiment.

In step S304, after the CAN frame sent by the first ECU is received, the data payload field of the CAN frame is read, and the data payload field is decrypted by using the fourth key, to obtain intermediate data. The intermediate data is decrypted by using the fifth key, to obtain a restored valid data payload and a restored CRC. Verification is performed on the restored valid data payload and the restored CRC by using a CRC algorithm, and if the verification fails, it is determined that the authentication fails.

For example, a second count value $LC_i^*$ of a second counter in the $i^{th}$ time segment is read, and $LC_i$ is extracted from the CAN frame received in the $i^{th}$ time segment. If $LC_i^* > LC$, the authentication fails. If $LC_i^*$ is not greater than $LC_i$, a second initial key $c^*$ is calculated, and $c^* = AES128(K_i, LC_i\|Padding)$. Herein, c* is split into two parts: $c^* = c^*_1\|c^*_0$, where $c^*_1$ is the fourth key, and $c^*_0$ is the fifth key. The data payload field of the CAN frame is read as "payload". The payload is decrypted as payload* = payload $\oplus$ c*o. The fifth key $c^*_1$ is used. M and the CRC are restored from the payload*. If the restored M and the restored CRC meet the CRC algorithm, the authentication succeeds, or otherwise, the authentication fails.

In an optional implementation, before authentication is performed on the CAN frame by using the authentication key, the second count value corresponding to the second counter is first obtained. The second count value is compared with a first count value, and if the second count value is greater than the first count value, it is determined that the authentication fails, where the first count value is a value corresponding to a first counter of the first ECU.

In this embodiment, if the value of the second counter of the second ECU is greater than the value of the first counter of the first ECU, it indicates that a time at which the first ECU sends the CAN frame is inconsistent with a time at which the second ECU receives the CAN frame, and the authentication fails.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system.

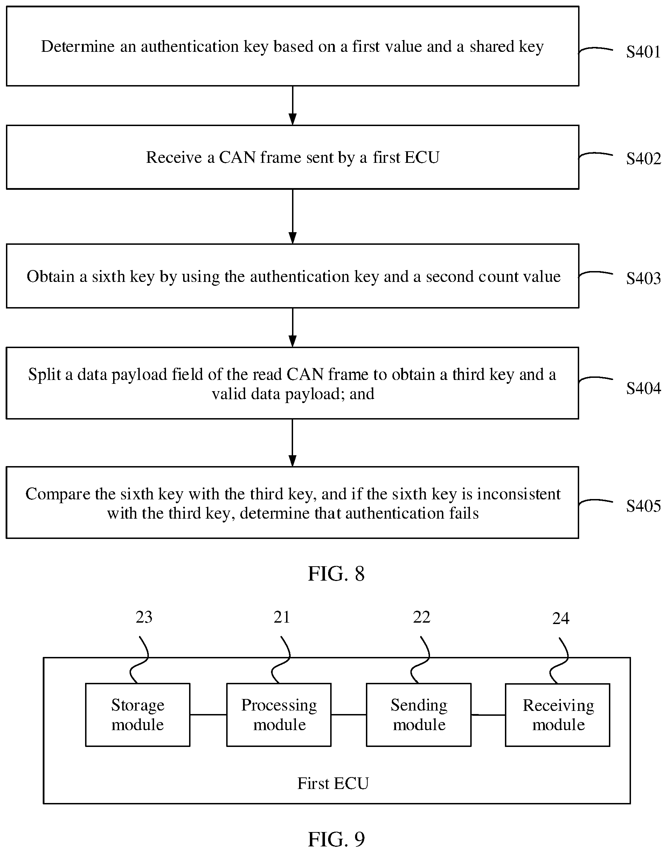

FIG. 8 is a flowchart 4 of a communication method according to an embodiment of this application. As shown in FIG. 8, the method in this embodiment includes the following steps:

Step S401: Determine an authentication key based on a first value and a shared key.
Step S402: Receive a CAN frame sent by a first ECU.
Step S403: Obtain a sixth key by using the authentication key and a second count value.
Step S404: Split a read data payload field of the CAN frame to obtain a third key and a valid data payload.
Step S405: Compare the sixth key with the third key, and if the sixth key is inconsistent with the third key, determine that authentication fails.

In this embodiment, the first ECU is communicatively connected to a second ECU through a bus, the first ECU may send a CAN message to the second ECU, and the second ECU performs authentication on the received CAN message. The first value is a value broadcast by a manager based on a time segment, and the shared key is a key shared by all ECUs in a vehicle.

In step S403, a second initial key may be generated by using the authentication key and the second count value. A length of the second initial key is pruned based on a data length required for authentication, to obtain the sixth key.

For example, the second count value $LC_i^*$ of a second counter in an $i^{th}$ time segment is read, and LC; is extracted from the CAN frame received in the $i^{th}$ time segment. If $LC_i^* > LC_i$, the authentication fails. If $LC_i^*$ is not greater than $LC_i$, the second initial key $c^*$ is calculated, and $c^* = AES128(K_i, LC_i\|Padding)$. It is assumed that vd* = Truncate(c*), the second initial key $c^*$ is pruned to the required length. A length of vd* is related to to-be-achieved authentication strength. The data payload field of the CAN frame is read as "payload". The payload is split into "payload" = M\|vd. Herein, vd and vd* are compared with each other. If vd = vd*, the authentication succeeds, or otherwise, the authentication fails.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system.

FIG. 9 is a schematic diagram 1 of a structure of a first ECU according to an embodiment of this application. As shown in FIG. 9, the first ECU in this embodiment includes: a processing module 21, a sending module 22, a storage module 23, and a receiving module 24.

The processing module 21 is configured to: determine an authentication key based on a first value and a shared key; split the authentication key to obtain a first key and a second key; assemble a CAN frame by using the first key and the second key, where the first key is used to encrypt a valid data payload, and the second key is used to randomize a location of a CRC bit in a data payload field.

The sending module 22 is configured to send the CAN frame to a second ECU through a CAN bus, where the first value is a value broadcast by a manager based on a time segment, and the shared key is a key shared by all ECUs in a vehicle.

For example, the processing module 21 may be a processor, and the sending module 22 may be a transmitter.

For example, the first ECU is communicatively connected with the second ECU through the bus. It should be noted that a quantity of first ECUs and that of second ECUs are not limited in this embodiment. There may be one or more of first ECUs and one or more of second ECUs.

It should be noted that, in addition to the vehicle field, this embodiment may be further applied to information transmission between other devices included in a CAN network.

In a possible design, the processing module 21 is specifically configured to:
generate the authentication key based on the first value and the shared key by using a block encryption algorithm.

In a possible design, the processing module 21 is specifically configured to:

generate a first initial key based on the authentication key and a first count value by using a block encryption algorithm, where the first count value is a value corresponding to a first counter; and
split the first initial key into the first key and the second key.

In a possible design, the processing module 21 is specifically configured to:

generate a keystream based on the first key;
perform an exclusive OR operation on the keystream and data corresponding to the valid data payload, to obtain encrypted data;
determine the location of the CRC bit in the data payload field based on values of bits in the second key;
place each CRC bit into a corresponding payload bit based on the location of the CRC bit in the data payload field; and
place the encrypted data into the remaining payload bits in the data payload field, to obtain the assembled CAN frame.

In a possible design, the processing module 21 is specifically configured to:
if the values of the bits in the second key can be used to determine only locations of some CRC bits in the data payload field, use a CRC bit that is determined last as a start point, and sequentially place the remaining CRC bits into subsequent payload bits.

In a possible design, the processing module 21 is specifically configured to:

if a value of the first bit in the second key is 1, sequentially place the CRC bits into corresponding payload bits in the data payload field in a right-to-left sequence in the data payload field based on the values of the bits in the second key; or

if a value of the first bit in the second key is 0, sequentially place the CRC bits into corresponding payload bits in the data payload field in a left-to-right sequence in the data payload field based on the values of the bits in the second key.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system. For a specific implementation process and an implementation principle, refer to the related descriptions in the embodiment shown in FIG. 3. Details are not described herein again.

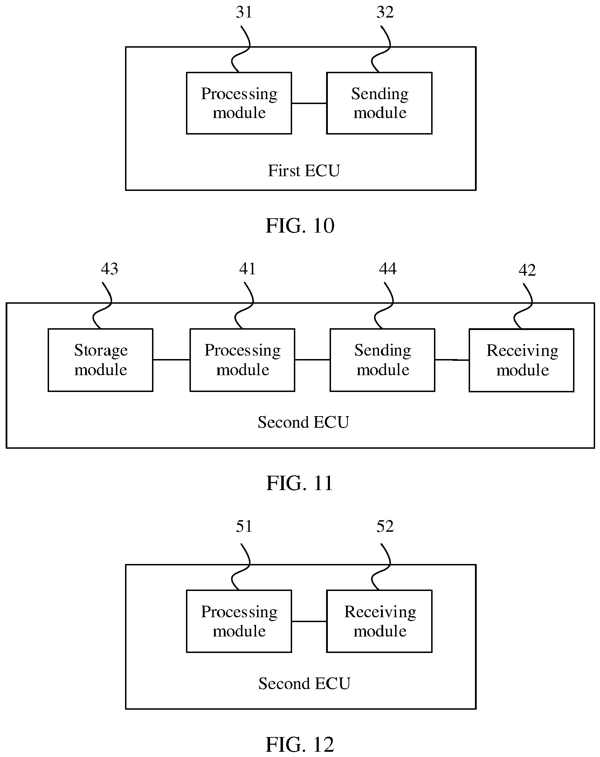

FIG. 10 is a schematic diagram 2 of a structure of a first ECU according to an embodiment of this application. As shown in FIG. 10, the first ECU in this embodiment includes: a processing module 31 and a sending module 32.

The processing module 31 is configured to: determine an authentication key based on a first value and a shared key; obtain a third key by using the authentication key and a first count value, where the first count value is a value corresponding to a first counter; and assemble a CAN frame by using the first count value and the third key, where the third key is used to encrypt a valid data payload.

The sending module 32 is configured to send the CAN frame to a second ECU through a CAN bus, where the first value is a value broadcast by a manager based on a time segment, and the shared key is a key shared by all ECUs in a vehicle.

For example, the processing module 31 may be a processor, and the sending module 32 may be a transmitter.

For example, the first ECU is communicatively connected with the second ECU through the bus. It should be noted that a quantity of first ECUs and that of second ECUs are not limited in this embodiment. There may be one or more of first ECUs and one or more of second ECUs.

It should be noted that, in addition to the vehicle field, this embodiment may be further applied to information transmission between other devices included in a CAN network.

In a possible design, the processing module 31 is specifically configured to:
generate the authentication key based on the first value and the shared key by using a block encryption algorithm.

In a possible design, the processing module 31 is specifically configured to:

generate a first initial key by using the authentication key and the first count value; and
prune a length of the first initial key based on a data length required for authentication, to obtain the third key.

In a possible design, the processing module 31 is specifically configured to:

> generate a keystream based on the third key;
> perform an exclusive OR operation on the keystream and data corresponding to the valid data payload, to obtain encrypted data; and
> place the first count value into a first counter field of the CAN frame, and place the encrypted data into a data payload field, to obtain the assembled CAN frame.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system. For a specific implementation process and an implementation principle, refer to the related descriptions in the embodiment shown in FIG. 6. Details are not described herein again.

FIG. 11 is a schematic diagram 1 of a structure of a second ECU according to an embodiment of this application. As shown in FIG. 11, the second ECU in this embodiment includes: a processing module 41, a receiving module 42, a storage module 43, and a sending module 44.

The processing module 41 is configured to determine an authentication key based on a first value and a shared key.

The receiving module 42 is configured to receive a CAN frame sent by a first ECU.

The processing module 41 is configured to split the authentication key to obtain a fourth key and a fifth key, where the fourth key is used to decrypt a valid data payload, and the fifth key is used to restore the valid data payload and a CRC.

The processing module 41 is configured to perform authentication on the CAN frame by using the fourth key and the fifth key, where the first value is a value broadcast by a manager based on a time segment, and the shared key is a key shared by all ECUs in a vehicle.

For example, the processing module 41 may be a processor, and the receiving module 42 may be a transmitter.

For example, the first ECU is communicatively connected with the second ECU through the bus. It should be noted that a quantity of first ECUs and that of second ECUs are not limited in this embodiment. There may be one or more of first ECUs and one or more of second ECUs.

It should be noted that, in addition to the vehicle field, this embodiment may be further applied to information transmission between other devices included in a CAN network.

In a possible design, the processing module 41 is specifically configured to:
generate the authentication key based on the first value and the shared key by using a block encryption algorithm.

In a possible design, before performing authentication on the CAN frame by using the authentication key, the processing module 41 is further specifically configured to:

> obtain a second count value corresponding to a second counter; and
> compare the second count value with a first count value, and if the second count value is greater than the first count value, determine that the authentication fails, where the first count value is a value corresponding to a first counter of the first ECU.

In a possible design, the processing module 41 is specifically configured to:

> read a data payload field of the CAN frame, and decrypt the data payload field by using the fourth key, to obtain intermediate data;
> decrypt the intermediate data by using the fifth key, to obtain the restored valid data payload and the restored CRC; and
> perform verification on the restored valid data payload and the restored CRC by using a CRC algorithm, and if the verification fails, determine that the authentication fails.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system. For a specific implementation process and an implementation principle, refer to the related descriptions in the embodiment shown in FIG. 7. Details are not described herein again.

FIG. 12 is a schematic diagram 2 of a structure of a second ECU according to an embodiment of this application. As shown in FIG. 12, the second ECU in this embodiment includes: a processing module 51 and a receiving module 52.

The processing module 51 is configured to determine an authentication key based on a first value and a shared key.

The receiving module 52 is configured to receive a CAN frame sent by a first ECU.

The processing module 51 is configured to obtain a sixth key by using the authentication key and a second count value, where the second count value is a value corresponding to a second counter.

The processing module 51 is configured to split a data payload field of the read CAN frame to obtain a third key and a valid data payload.

The processing module 51 is configured to: compare the sixth key with the third key, and if the sixth key is inconsistent with the third key, determine that authentication fails.

In a possible design, the processing module 51 is specifically configured to:

generate a second initial key by using the authentication key and the second count value; and prune a length of the second initial key based on a data length required for authentication, to obtain the sixth key.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system. For a specific implementation process and an implementation principle, refer to the related descriptions in the embodiment shown in FIG. 8. Details are not described herein again.

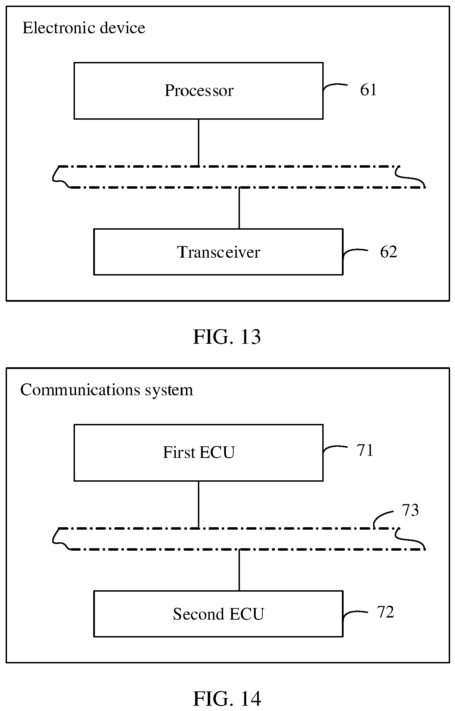

FIG. 13 is a schematic diagram of a structure of an electronic device according to an embodiment of this application. As shown in FIG. 13, the electronic device in this embodiment includes: a processor 61 and a transceiver 62. The processor 61 is configured to execute instructions in computer-executable program code. When the processor 61 executes the instructions, the instructions enable the electronic device to perform the method in any one of FIG. 3, and FIG. 6 to FIG. 8.

In this embodiment, a manager broadcasts a first value to electronic control units based on a time segment, so that when a CAN message is sent between the electronic control units, encryption and authentication can be performed by using the first value and a shared key. This improves information transmission security in an in-vehicle system. For a specific implementation process and an implementation principle, refer to the related descriptions in the embodiments shown in FIG. 3, and FIG. 6 to FIG. 8. Details are not described herein again.

FIG. 14 is a schematic diagram of a structure of a communications system according to an embodiment of this application. As shown in FIG. 14, the communications system in this embodiment includes: a first ECU 71 and a second ECU 72. The first ECU 71 is communicatively connected to the second ECU 72 through a CAN bus 73.

For example, the first ECU 71 performs the method shown in FIG. 3, and the second ECU performs the method shown in FIG. 7.

For example, the first ECU 71 performs the method shown in FIG. 6, and the second ECU performs the method shown in FIG. 8.

In this embodiment, a manager broadcasts a first value to the first ECU and the second ECU based on a time segment, so that when the first ECU sends a CAN message to the second ECU, encryption and authentication can be performed by using a first value and a shared key. This improves information transmission security in an in-vehicle system. For a specific implementation process and an implementation principle, refer to the related descriptions in the embodiments shown in FIG. 3, and FIG. 6 to FIG. 8. Details are not described herein again.

An embodiment of this application provides a computer-readable storage medium. The computer-readable storage medium stores instructions. When the instructions are executed, a computer is enabled to perform the method performed by the terminal device in the foregoing embodiments of this application.

An embodiment of this application provides a computer-readable storage medium. The computer-readable storage medium stores instructions. When the instructions are executed, a computer is enabled to perform the method performed by the network device in the foregoing embodiments of this application.

In the several embodiments provided in this application, it should be understood that the disclosed apparatus and method may be implemented in another manner. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, displayed or discussed mutual couplings or direct couplings or communication connections may be implemented by using some interfaces. Indirect couplings or the communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of the embodiments.

In addition, function units in embodiments of this application may be integrated into one processing unit, each of the units may stand alone physically, or two or more units are integrated into one unit. The integrated unit may be implemented in a form of hardware, or may be implemented in a form of hardware and a software functional unit.

It should be noted that in embodiments of this application, division into the modules is an example, and is merely logical function division. During actual implementation, there may be another division manner. Function modules in embodiments of this application may be integrated into one processing module, or each of the modules may stand alone physically, or two or more modules are integrated into one module. The integrated module may be implemented in a form of hardware, or may be implemented in a form of a software function module.

When the integrated module is implemented in the form of a software functional module and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or the functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

**Claims**

1. A communication method performed by a first electronic control unit, ECU, (11), the communication method comprising:

   determining (S101), an authentication key based on a first value and a shared key;
   splitting (S102) the authentication key to obtain a first key and a second key;
   assembling (S 103) a controller area network, CAN, frame by using the first key and the second key, wherein the first key is used to encrypt a valid data payload, and the second key is used to randomize a location of a cyclic redundancy check, CRC, bit in a data payload field; and
   sending (S 104) the CAN frame to a second ECU (11) through a CAN bus, wherein the first value is a value broadcast by a manager based on a time segment, and the shared key is a key shared by all ECUs in a vehicle;
   **characterized in that** the assembling a CAN frame by using the first key and the second key comprises:

   generating a keystream based on the first key;
   performing an exclusive OR operation on the keystream and data corresponding to the valid data payload, to obtain encrypted data;
   determining the location of the CRC bit in the data payload field based on values of bits in the second key;
   placing each CRC bit into a corresponding payload bit based on the location of the CRC bit in the data payload field; and
   placing the encrypted data into the remaining payload bits in the data payload field, to obtain the assembled CAN frame.

2. The method according to claim 1, wherein the determining (S 101) an authentication key based on a first value and a shared key comprises:
   generating the authentication key based on the first value and the shared key by using a block encryption algorithm.

3. The method according to claim 1, wherein the splitting (S102) the authentication key to obtain a first key and a second key comprises:

   generating a first initial key based on the authentication key and a first count value by using a block encryption algorithm, wherein the first count value is a value corresponding to a first counter; and
   splitting the first initial key into the first key and the second key.

4. The method according to any of claims 1 to 3, further comprising:
   if the values of the bits in the second key can be used to determine only locations of some CRC bits in the data payload field, using a CRC bit that is determined last as a start point, and sequentially placing the remaining CRC bits into subsequent payload bits.

5. The method according to any of claims 1 to 3, wherein the determining the location of the CRC bit in the data payload field based on values of bits in the second key comprises:

> if a value of the first bit in the second key is 1, sequentially placing the CRC bits into corresponding payload bits in the data payload field in a right-to-left sequence in the data payload field based on the values of the bits in the second key; or
> if a value of the first bit in the second key is 0, sequentially placing the CRC bits into corresponding payload bits in the data payload field in a left-to-right sequence in the data payload field based on the values of the bits in the second key.

6. A communication method performed by a second electronic control unit, ECU, (11), the communication method comprising:

> determining (S301) an authentication key based on a first value and a shared key;
> receiving (S302) a controller area network, CAN, frame sent by a first ECU, wherein the CAN frame is assembled by the first ECU by using a first key and a second key, wherein the first key is used to encrypt a valid data payload, and the second key is used to randomize a location of a cyclic redundancy check, CRC, bit in a data payload field, and wherein the first key and the second key are obtained by the first ECU by splitting the authentication key;
> splitting (S303) the authentication key to obtain a third key and a fourth key, wherein the third key is used to decrypt a valid data payload, and the fourth key is used to restore the valid data payload and a cyclic redundancy check, CRC, bit; and
> performing (S304) authentication on the CAN frame by using the third key and the fourth key, wherein the first value is a value broadcast by a manager based on a time segment, and the shared key is a key shared by all ECUs in a vehicle;
> **characterized in that** the CAN frame has been assembled by:
>
>> generating a keystream based on the first key;
>> performing an exclusive OR operation on the keystream and data corresponding to the valid data payload, to obtain encrypted data;
determining the location of the CRC bit in the data payload field based on values of bits in the second key;
placing each CRC bit into a corresponding payload bit based on the location of the CRC bit in the data payload field; and
placing the encrypted data into the remaining payload bits in the data payload field, to obtain the CAN frame.

7. The method according to claim 6, wherein the determining (S301) an authentication key based on a first value and a shared key comprises:
generating the authentication key based on the first value and the shared key by using a block encryption algorithm.

8. The method according to claim 6, before the performing (S304) authentication on the CAN frame by using the authentication key, further comprising:

> obtaining a second count value corresponding to a second counter; and
> comparing the second count value with a first count value, and if the second count value is greater than the first count value, determining that the authentication fails, wherein the first count value is a value corresponding to a first counter of the first ECU.

9. The method according to claim 6, wherein the performing (S304) authentication on the CAN frame by using the third key and the fourth key comprises:

> reading a data payload field of the CAN frame, and decrypting the data payload field by using the third key, to obtain intermediate data;
> decrypting the intermediate data by using the fourth key, to obtain the restored valid data payload and the restored CRC; and
> performing verification on the restored valid data payload and the restored CRC by using a CRC algorithm, and if the verification fails, determining that the authentication fails.

10. An electronic device, comprising: a processor (61) and a transceiver (62), wherein the processor is configured to execute instructions in computer-executable program code, and when the processor executes the instructions, the instructions enable the electronic device to perform the method according to any one of claims 1 to 5.

11. An electronic device, comprising: a processor (71) and a transceiver (72), wherein the processor is configured to execute instructions in computer-executable program code, and when the processor executes the instructions, the instructions enable the electronic device to perform the method according to any one of claims 6 to 9.

12. A communications system, comprising: a first electronic control unit, ECU, and a second ECU, wherein the first ECU is communicatively connected to the second ECU through a controller area network, CAN, bus, the first ECU being configured to perform the method according to any one of claims 1 to 5, and the second ECU being configured to perform the method according to any one of claims 6 to 9.

**Patentansprüche**

1. Kommunikationsverfahren, durchgeführt durch eine erste elektronische Steuereinheit, ECU, (11), wobei das Kommunikationsverfahren Folgendes umfasst:

    Bestimmen (S101) eines Authentifizierungsschlüssels basierend auf einem ersten Wert und einem gemeinsamen Schlüssel;
    Aufteilen (S102) des Authentifizierungsschlüssels, um einen ersten Schlüssel und einen zweiten Schlüssel zu erlangen;
    Zusammenstellen (S103) eines Controller-Area-Network-, CAN-, Frames unter Verwendung des ersten Schlüssels und des zweiten Schlüssels, wobei der erste Schlüssel dazu verwendet wird, eine gültige Datennutzlast zu verschlüsseln, und der zweite Schlüssel dazu verwendet wird, eine Position eines zyklischen Redundanzprüfungs-, CRC-, Bits in einem Datennutzlastfeld zu randomisieren; und
    Senden (S104) des CAN-Frames an eine zweite ECU (11) über einen CAN-Bus, wobei der erste Wert ein Wert ist, der von einem Manager basierend auf einem Zeitsegment gesendet wird, und der gemeinsame Schlüssel ein Schlüssel ist, den sich alle ECU in einem Fahrzeug teilen; **dadurch gekennzeichnet, dass** das Zusammenstellen eines CAN-Frames unter Verwendung des ersten Schlüssels und des zweiten Schlüssels Folgendes umfasst:

        Erzeugen eines Schlüsselstroms basierend auf dem ersten Schlüssel;
        Durchführen einer exklusiven ODER-Operation an dem Schlüsselstrom und den Daten, die der gültigen Datennutzlast entsprechen, um verschlüsselte Daten zu erlangen;
        Bestimmen der Position des CRC-Bits in dem Datennutzlastfeld basierend auf Werten von Bits in dem zweiten Schlüssel;
        Platzieren jedes CRC-Bits in einem entsprechenden Nutzlastbit basierend auf der Position des CRC-Bits in dem Datennutzlastfeld; und
        Platzieren der verschlüsselten Daten in die verbleibenden Nutzlastbits in dem Datennutzlastfeld, um den zusammengestellten CAN-Frame zu erlangen.

2. Verfahren nach Anspruch 1, wobei das Bestimmen (S101) eines Authentifizierungsschlüssels basierend auf einem ersten Wert und einem gemeinsamen Schlüssel Folgendes umfasst:
Erzeugen des Authentifizierungsschlüssels basierend auf dem ersten Wert und dem gemeinsamen Schlüssel unter Verwendung eines Blockverschlüsselungsalgorithmus.

3. Verfahren nach Anspruch 1, wobei das Aufteilen (S102) des Authentifizierungsschlüssels, um einen ersten Schlüssel und einen zweiten Schlüssel zu erlangen, Folgendes umfasst:

    Erzeugen eines ersten anfänglichen Schlüssels basierend auf dem Authentifizierungsschlüssel und einem ersten Zählwert unter Verwendung eines Blockverschlüsselungsalgorithmus, wobei der erste Zählwert ein Wert ist, der einem ersten Zähler entspricht; und
    Aufteilen des ersten anfänglichen Schlüssels in den ersten Schlüssel und den zweiten Schlüssel.

4. Verfahren nach einem der Ansprüche 1 bis 3, ferner umfassend:
wenn die Werte der Bits in dem zweiten Schlüssel dazu verwendet werden können, nur Positionen einiger CRC-Bits in dem Datennutzlastfeld zu bestimmen, Verwenden eines CRC-Bits, das als letztes bestimmt wird, als Startpunkt und aufeinanderfolgendes Platzieren der verbleibenden CRC-Bits in die nachfolgenden Nutzlastbits.

5. Verfahren nach einem der Ansprüche 1 bis 3, wobei das Bestimmen der Position des CRC-Bits in dem Datennutzlastfeld basierend auf Werten von Bits in dem zweiten Schlüssel Folgendes umfasst:

    wenn ein Wert des ersten Bits in dem zweiten Schlüssel 1 ist, aufeinanderfolgendes Platzieren der CRC-Bits in entsprechende Nutzlastbits in dem Datennutzlastfeld in einer Reihenfolge von rechts nach links in dem Datennutzlastfeld basierend auf den Werten der Bits in dem zweiten Schlüssel; oder
    wenn ein Wert des ersten Bits in dem zweiten Schlüssel 0 ist, aufeinanderfolgendes Platzieren der CRC-Bits in entsprechende Nutzlastbits in dem Datennutzlastfeld in einer Reihenfolge von links nach rechts in dem Datennutzlastfeld basierend auf den Werten der Bits in dem zweiten Schlüssel.

**6.** Kommunikationsverfahren, durchgeführt durch eine zweite elektronische Steuereinheit, ECU, (11), wobei das Kommunikationsverfahren Folgendes umfasst:

Bestimmen (S301) eines Authentifizierungsschlüssels basierend auf einem ersten Wert und einem gemeinsamen Schlüssel;

Empfangen (S302) eines Controller-Area-Network-, CAN-, Frames, der von einer ersten ECU gesendet wird, wobei der CAN-Frame von der ersten ECU unter Verwendung eines ersten Schlüssels und eines zweiten Schlüssels zusammengestellt wird, wobei der erste Schlüssel dazu verwendet wird, eine gültige Datennutzlast zu verschlüsseln, und der zweite Schlüssel dazu verwendet wird, eine Position eines zyklischen Redundanzprüfungs-, CRC-, Bits in einem Datennutzlastfeld zu randomisieren, und wobei der erste Schlüssel und der zweite Schlüssel von der ersten ECU durch Aufteilen des Authentifizierungsschlüssels erlangt werden;

Aufteilen (S303) des Authentifizierungsschlüssels, um einen dritten Schlüssel und einen vierten Schlüssel zu erlangen, wobei der dritte Schlüssel dazu verwendet wird, eine gültige Datennutzlast zu entschlüsseln, und der vierte Schlüssel dazu verwendet wird, die gültige Datennutzlast und ein zyklisches Redundanzprüfungs-, CRC-, Bit wiederherzustellen; und

Durchführen (S304) einer Authentifizierung an dem CAN-Frame unter Verwendung des dritten Schlüssels und des vierten Schlüssels, wobei der erste Wert ein Wert ist, der von einem Manager basierend auf einem Zeitsegment übertragen wird, und der gemeinsame Schlüssel ein Schlüssel ist, den sich alle ECU in einem Fahrzeug teilen;

**dadurch gekennzeichnet, dass** der CAN-Frame zusammengestellt wurde durch:

Erzeugen eines Schlüsselstroms basierend auf dem ersten Schlüssel;

Durchführen einer exklusiven ODER-Operation an dem Schlüsselstrom und den Daten, die der gültigen Datennutzlast entsprechen, um verschlüsselte Daten zu erlangen;

Bestimmen der Position des CRC-Bits in dem Datennutzlastfeld basierend auf Werten von Bits in dem zweiten Schlüssel;

Platzieren jedes CRC-Bits in einem entsprechenden Nutzlastbit basierend auf der Position des CRC-Bits in dem Datennutzlastfeld; und

Platzieren der verschlüsselten Daten in die verbleibenden Nutzlastbits in dem Datennutzlastfeld, um den CAN-Frame zu erlangen.

**7.** Verfahren nach Anspruch 6, wobei das Bestimmen (S301) eines Authentifizierungsschlüssels basierend auf einem ersten Wert und einem gemeinsamen Schlüssel Folgendes umfasst:
Erzeugen des Authentifizierungsschlüssels basierend auf dem ersten Wert und dem gemeinsamen Schlüssel unter Verwendung eines Blockverschlüsselungsalgorithmus.

**8.** Verfahren nach Anspruch 6, vor dem Durchführen (S304) der Authentifizierung an dem CAN-Frame unter Verwendung des Authentifizierungsschlüssels ferner umfassend:

Erlangen eines zweiten Zählwerts, der einem zweiten Zähler entspricht; und

Vergleichen des zweiten Zählwerts mit einem ersten Zählwert und, wenn der zweite Zählwert größer ist als der erste Zählwert, Bestimmen, dass die Authentifizierung fehlschlägt, wobei der erste Zählwert ein Wert ist, der einem ersten Zähler der ersten ECU entspricht.

**9.** Verfahren nach Anspruch 6, wobei das Durchführen (S304) der Authentifizierung an dem CAN-Frame unter Verwendung des dritten Schlüssels und des vierten Schlüssels Folgendes umfasst:

Lesen eines Datennutzlastfelds des CAN-Frames und

Entschlüsseln des Datennutzlastfelds unter Verwendung des dritten Schlüssels, um Zwischendaten zu erlangen;

Entschlüsseln der Zwischendaten unter Verwendung des vierten Schlüssels, um die wiederhergestellte gültige Datennutzlast und den wiederhergestellten CRC zu erlangen; und

Durchführen einer Verifikation an der wiederhergestellten gültigen Datennutzlast und des wiederhergestellten CRC unter Verwendung eines CRC-Algorithmus und, wenn die Verifikation fehlschlägt, Bestimmen, dass die Authentifizierung fehlschlägt.

**10.** Elektronische Vorrichtung, umfassend: einen Prozessor (61) und einen Sendeempfänger (62), wobei der Prozessor dazu konfiguriert ist, Anweisungen in computerausführbarem Programmcode auszuführen, und, wenn der Prozessor die Anweisungen ausführt, ermöglichen die Anweisungen es der elektronischen Vorrichtung, das Verfahren nach einem der Ansprüche 1 bis 5 auszuführen.

**11.** Elektronische Vorrichtung, umfassend: einen Prozessor (71) und einen Sendeempfänger (72), wobei der Prozessor dazu konfiguriert ist, Anweisungen in computerausführbarem Programmcode auszuführen, und, wenn der Prozessor die Anweisungen ausführt, ermöglichen die Anweisungen es der elektronischen Vorrichtung, das Verfahren nach einem der Ansprüche 6 bis 9 auszuführen.

12. Kommunikationssystem, umfassend: eine erste elektronische Steuereinheit, ECU, und eine zweite ECU, wobei die erste ECU kommunikativ mit der zweiten ECU über einen Controller-Area-Network-, CAN-, Bus verbunden ist, wobei die erste ECU dazu konfiguriert ist, das Verfahren nach einem der Ansprüche 1 bis 5 auszuführen, und die zweite ECU dazu konfiguriert ist, das Verfahren nach einem der Ansprüche 6 bis 9 auszuführen.

**Revendications**

1. Procédé de communication exécuté par une première unité de commande électronique, ECU, (11), le procédé de communication comprenant :

la détermination (S101), d'une clé d'authentification sur la base d'une première valeur et d'une clé partagée ;
le fractionnement (S102) de la clé d'authentification pour obtenir une première clé et une deuxième clé ;
l'assemblage (S103) d'une trame de réseau de zone de dispositif de commande, CAN, à l'aide de la première clé et de la deuxième clé, dans lequel la première clé est utilisée pour chiffrer une charge utile de données valide, et la deuxième clé est utilisée pour randomiser un emplacement d'un bit de contrôle de redondance cyclique, CRC, dans un champ de charge utile de données ; et
l'envoi (S104) de la trame CAN à une seconde ECU (11) via un bus CAN, dans lequel la première valeur est une valeur diffusée par un gestionnaire sur la base d'un segment temporel, et la clé partagée est une clé partagée par toutes les ECU dans un véhicule ;
**caractérisé en ce que** l'assemblage d'une trame CAN à l'aide de la première clé et de la deuxième clé comprend :

la génération d'un flux de clés sur la base de la première clé ;
la réalisation d'une opération OU exclusif sur le flux de clés et les données correspondant à la charge utile de données valide, pour obtenir des données chiffrées ;
la détermination de l'emplacement du bit CRC dans le champ de charge utile de données sur la base de valeurs de bits dans la deuxième clé ;
le placement de chaque bit CRC dans un bit de charge utile correspondant sur la base de l'emplacement du bit CRC dans le champ de charge utile de données ; et
le placement des données chiffrées dans les bits de charge utile restants dans le champ de charge utile de données, pour obtenir la trame CAN assemblée.

2. Procédé selon la revendication 1, dans lequel la détermination (S101) d'une clé d'authentification sur la base d'une première valeur et d'une clé partagée comprend :
la génération de la clé d'authentification sur la base de la première valeur et de la clé partagée à l'aide d'un algorithme de chiffrement par blocs.

3. Procédé selon la revendication 1, dans lequel le fractionnement (S102) de la clé d'authentification pour obtenir une première clé et une deuxième clé comprend :

la génération d'une première clé initiale sur la base de la clé d'authentification et d'une première valeur de comptage à l'aide d'un algorithme de chiffrement par blocs, dans lequel la première valeur de comptage est une valeur correspondant à un premier compteur ; et
le fractionnement de la première clé initiale en la première clé et la deuxième clé.

4. Procédé selon l'une quelconque des revendications 1 à 3, comprenant en outre :
si les valeurs des bits dans la deuxième clé peuvent être utilisées pour déterminer uniquement les emplacements de certains bits CRC dans le champ de charge utile de données, en utilisant un bit CRC qui est déterminé en dernier comme point de départ, et en plaçant séquentiellement les bits CRC restants dans les bits de charge utile suivants.

5. Procédé selon l'une quelconque des revendications 1 à 3, dans lequel la détermination de l'emplacement du bit CRC dans le champ de charge utile de données sur la base de valeurs de bits dans la deuxième clé comprend :

si une valeur du premier bit dans la deuxième clé est 1, le placement séquentiel des bits CRC dans des bits de charge utile correspondants dans le champ de charge utile de données dans une séquence de droite à gauche dans le champ de charge utile de données sur la base des valeurs des bits dans la deuxième clé ; ou
si une valeur du premier bit dans la deuxième clé est 0, le placement séquentiel des bits CRC dans des bits de charge utile correspondants dans le champ de charge utile de données dans une séquence de gauche à droite dans le champ de charge utile de données sur la base des valeurs des bits dans la deuxième clé.

6. Procédé de communication exécuté par une seconde unité de commande électronique, ECU, (11), le procédé de communication comprenant :

la détermination (S301) d'une clé d'authentification sur la base d'une première valeur et d'une clé partagée ;

la réception (S302) d'une trame de réseau de zone de dispositif de commande, CAN, envoyée par une première ECU, dans lequel la trame CAN est assemblée par la première ECU à l'aide d'une première clé et d'une deuxième clé, dans lequel la première clé est utilisée pour chiffrer une charge utile de données valide, et la deuxième clé est utilisée pour randomiser un emplacement d'un bit de contrôle de redondance cyclique, CRC, dans un champ de charge utile de données, et dans lequel la première clé et la deuxième clé sont obtenues par la première ECU en fractionnant la clé d'authentification ;

le fractionnement (S303) de la clé d'authentification pour obtenir une troisième clé et une quatrième clé, dans lequel la troisième clé est utilisée pour déchiffrer une charge utile de données valide, et la quatrième clé est utilisée pour restaurer la charge utile de données valide et un bit de contrôle de redondance cyclique, CRC ; et

la réalisation (S304) d'une authentification sur la trame CAN à l'aide de la troisième clé et de la quatrième clé, dans lequel la première valeur est une valeur diffusée par un gestionnaire sur la base d'un segment temporel, et la clé partagée est une clé partagée par toutes les ECU d'un véhicule ;

**caractérisé en ce que** la trame CAN a été assemblée par :

la génération d'un flux de clés sur la base de la première clé ;

la réalisation d'une opération OU exclusif sur le flux de clés et les données correspondant à la charge utile de données valide, pour obtenir des données chiffrées ;

la détermination de l'emplacement du bit CRC dans le champ de charge utile de données sur la base de valeurs de bits dans la deuxième clé ;

le placement de chaque bit CRC dans un bit de charge utile correspondant sur la base de l'emplacement du bit CRC dans le champ de charge utile de données ; et

le placement des données chiffrées dans les bits de charge utile restants dans le champ de charge utile de données, pour obtenir la trame CAN.

7. Procédé selon la revendication 6, dans lequel la détermination (S301) d'une clé d'authentification sur la base d'une première valeur et d'une clé partagée comprend :

la génération de la clé d'authentification sur la base de la première valeur et de la clé partagée à l'aide d'un algorithme de chiffrement par blocs.

8. Procédé selon la revendication 6, avant de réaliser l'authentification (S304) sur la trame CAN en utilisant la clé d'authentification, comprenant en outre :

l'obtention d'une seconde valeur de comptage correspondant à un second compteur ; et

la comparaison de la seconde valeur de comptage à une première valeur de comptage, et si la seconde valeur de comptage est supérieure à la première valeur de comptage, le fait de déterminer que l'authentification échoue, dans lequel la première valeur de comptage est une valeur correspondant à un premier compteur de la première ECU.

9. Procédé selon la revendication 6, dans lequel la réalisation (S304) d'une authentification sur la trame CAN en utilisant la troisième clé et la quatrième clé comprend :

la lecture d'un champ de charge utile de données de la trame CAN, et le déchiffrement du champ de charge utile de données à l'aide de la troisième clé, pour obtenir des données intermédiaires ;

le déchiffrement des données intermédiaires à l'aide de la quatrième clé, pour obtenir la charge utile de données valide restaurée et le CRC restauré ; et

la réalisation d'une vérification sur la charge utile de données valide restaurée et le CRC restauré à l'aide d'un algorithme CRC, et si la vérification échoue, le fait de déterminer que l'authentification échoue.

10. Dispositif électronique, comprenant : un processeur (61) et un émetteur-récepteur (62), dans lequel le processeur est configuré pour exécuter des instructions dans un code de programme exécutable par ordinateur, et lorsque le processeur exécute les instructions, les instructions permettent au dispositif électronique d'exécuter le procédé selon l'une quelconque des revendications 1 à 5.

11. Dispositif électronique, comprenant : un processeur (71) et un émetteur-récepteur (72), dans lequel le processeur est configuré pour exécuter des instructions dans un code de programme exécutable par ordinateur, et lorsque le processeur exécute les instructions, les instructions permettent au dispositif électronique d'exécuter le procédé selon l'une quelconque des revendications 6 à 9.

**12.** Système de communication, comprenant : une première unité de commande électronique, ECU, et une seconde ECU, dans lequel la première ECU est connectée de manière communicative à la seconde ECU via un bus de réseau de zone de dispositif de commande, CAN, la première ECU étant configurée pour exécuter le procédé selon l'une quelconque des revendications 1 à 5, et la seconde ECU étant configurée pour exécuter le procédé selon l'une quelconque des revendications 6 à 9.

FIG. 1

11

Electronic control unit

1104

| Memory | Microcontroller | 1101

CAN controller | 1102

Transceiver | 1103

13

FIG. 2

Determine an authentication key based on a first value and a shared key — S101

Split the authentication key to obtain a first key and a second key — S102

Assemble a CAN frame by using the first key and the second key — S103

Send the CAN frame to a second ECU through a CAN bus — S104

FIG. 3

$c_1$ | 0 0 1 0 1 0 0 0 1 1 0 ...

Data payload field

FIG. 4

$c_1$ | 0 0 1 0 1 0 0 0 1 1 0 ...

0     1

Data payload field

Data payload field

FIG. 5

Determine an authentication key based on a first value and a shared key — S201

Obtain a third key by using the authentication key and a first count value — S202

Assemble a CAN frame by using the first key and the third key — S203

Send the CAN frame to a second ECU through a CAN bus — S204

FIG. 6

Determine an authentication key based on a first value and a shared key — S301

Receive a CAN frame sent by a first ECU — S302

Split the authentication key to obtain a fourth key and a fifth key — S303

Perform authentication on the CAN frame by using the fourth key and the fifth key — S304

FIG. 7

| | |
|---|---|
| Determine an authentication key based on a first value and a shared key | S401 |

$\downarrow$

| | |
|---|---|
| Receive a CAN frame sent by a first ECU | S402 |

$\downarrow$

| | |
|---|---|
| Obtain a sixth key by using the authentication key and a second count value | S403 |

$\downarrow$

| | |
|---|---|
| Split a data payload field of the read CAN frame to obtain a third key and a valid data payload; and | S404 |

$\downarrow$

| | |
|---|---|
| Compare the sixth key with the third key, and if the sixth key is inconsistent with the third key, determine that authentication fails | S405 |

FIG. 8

23  21  22  24

| Storage module | Processing module | Sending module | Receiving module |
|---|---|---|---|

First ECU

FIG. 9

FIG. 10

FIG. 11

FIG. 12

Electronic device

Processor — 61

Transceiver — 62

FIG. 13

Communications system

First ECU — 71

— 73

Second ECU — 72

FIG. 14

**REFERENCES CITED IN THE DESCRIPTION**

**Patent documents cited in the description**

- WO 2019217610 A